# EUROPÄISCHE PATENTSCHRIFT

(11) **EP 0 963 304 B1**
(45) Veröffentlichungstag und Bekanntmachung des Hinweises auf die Patenterteilung: **03.09.2003**
(21) Anmeldenummer: 98916806.7
(22) Anmeldetag: 27.02.1998
(51) Int. Cl.: B60G 3/18, B60G 7/02, B62D 21/11

(54) **HINTERRADAUFHÄNGUNG EINES KRAFTFAHRZEUGES**
REAR WHEEL SUSPENSION OF A MOTOR VEHICLE
SUSPENSION DE ROUE ARRIERE D'UN VEHICULE AUTOMOBILE

(30) Priorität: 01.03.1997 DE 19708421; 01.03.1997 DE 19708422
(43) Veröffentlichungstag der Anmeldung: 15.12.1999
(60) Teilanmeldung: 02018689.6
(73) Patentinhaber: ADAM OPEL AG, 65423 Rüsselsheim (DE)
(72) Erfinder: PELZ, Gerhard, D-55576 Welgesheim (DE); DENK, Peter, D-64521 Gross-Gerau (DE); OLSSON, Gunnar, D-65838 Liederbach (DE); SCHMIDT, Rudolf, D-65428 Rüsselsheim (DE)
(74) Vertreter: Kümpfel, Heinz, Dipl.-Ing.
(86) Internationale Anmeldenummer: DE9800574
(87) Internationale Veröffentlichungsnummer: WO98038055

(56) Entgegenhaltungen:
- EP-A- 0 182 480
- EP-A- 0 193 847
- EP-A- 0 277 650
- EP-A- 0 307 547
- WO-A-96/00661
- WO-A-96/32312
- DE-A- 3 434 790
- DE-A- 3 942 794
- DE-C- 3 048 794
- FR-A- 2 674 187
- US-A- 4 840 396
- US-A- 4 989 894
- PATENT ABSTRACTS OF JAPAN vol. 014, no. 536 (M-1052), 27.November 1990 & JP 02 225184 A (MAZDA MOTOR CORP), 7.September 1990,

## Beschreibung

Die Erfindung bezieht sich auf eine Hinterradaufhängung für ein Fahrzeug mit einem oberen und einem unteren Querlenker, einem quer angeordneten Kompensationslenker und einem Längslenker für die Mehrfachanlenkung eines Achsträgers an der Fahrzeugkarosserie, wobei, jeweils bezogen auf die Fahrtrichtung des Fahrzeuges, der untere Querlenker hinter der Radachse des Achsträgers, der obere Querlenker in etwa oberhalb der Radachse vor dem unteren Querlenker liegt, und mit einer Karosserieabstützung, bestehend aus einer Feder und einem Dämpfer, wobei die Feder am unteren Querlenker abgestützt ist.

Eine derartige Hinterradaufhängung ist in der EP-A-0 277 650 beschrieben. Dämpfer und Feder bilden eine Baueinheit, die sich am hinteren unteren Querlenker abstützen. Die inneren Enden des oberen Querlenkers und des Kompensationslenkers sind an einem elastisch am Fahrzeugaufbau gelagerten Fahrschemel gelagert, zu dem keine näheren Angaben gemacht werden.

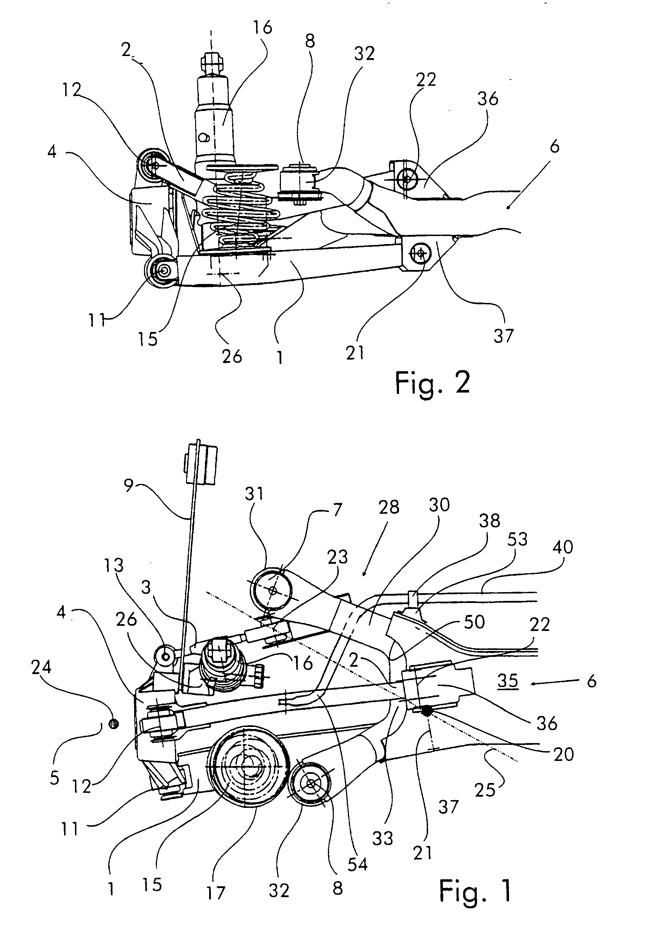

Eine Hinterradaufhängung ist auch in der DE 34 34 790 A1 beschrieben. Die Karosserieabstützung erfolgt dabei mittels eines Feder-Dämpferbeins, also einer Kombination aus einem Dämpfer und einer Feder, wobei die untere Abstützung der Feder am Außenrohr des Dämpfers erfolgt. Das untere Befestigungsauge des Dämpfers ist am Achsträger auf Höhe der Radachse gelagert (siehe z. B. Figur 2 der Offenlegungsschrift). Diese Anordnung hat u. a. den Nachteil, dass das Feder-Dämpferbein sehr hoch aufragt, so dass ihm ein Einbauraum zur Verfügung gestellt werden muss, der dem Koffer- bzw. Laderaum des Fahrzeuges verloren geht.

Außerdem befindet es sich nahe der Schwenkachse, um die der Achsträger beim Einfedern im Bezug zur Karosserie verschwenkt wird. Dies bedingt insbesondere für die Feder eine schlechte Kraft- bzw. Wegübersetzung.

Die Erfindung beruht daher auf der Aufgabe, eine Hinterradaufhängung zu schaffen, die günstige fahrdynamische Werte aufweist, die weiterhin so kompakt und flach ist, dass der Laderaum des Fahrzeuges einen möglichst tiefen Boden aufweist und eine große seitliche Ausdehnung besitzt. Des Weiteren soll Platz für weitere Aggregate unterhalb des Ladebodens, insbesondere für einen Fahrzeugtank, vorhanden sein.

Zur Lösung der Aufgabe wird vorgeschlagen, dass das untere Befestigungsauge des Dämpfers unmittelbar am Achsträger gelagert ist, wobei der Kompensationslenker in Fahrtrichtung vor dem Dämpfer liegt, und dass die Querlenker und der Kompensationslenker an einem Hilfsrahmen befestigt sind, wobei die Befestigungspunkte des Hilfsrahmens für jede Fahrzeugseite etwa auf halbem Abstand zwischen dem Achsträger und der karosserieseitigen Anlenkung der Querlenker liegen.

Damit wird als erstes erreicht, dass die untere Abstützung der Feder weit nach unten gesetzt wird, so dass die obere Abstützung unter Berücksichtigung der notwendigerweise vorzusehenden Federwege unterhalb des Kofferraumbodens bzw. Laderaumbodens angeordnet werden kann.

Durch den Versatz des oberen Lenkers gegenüber dem unteren Lenker wird zweitens ein ausreichend großer Einbauraum für die Feder geschaffen, so dass z. B. eine kurze Tonnenfeder mit progressiver Federcharakteristik (Miniblockfeder) eingesetzt werden kann. Die Anordnung gewährleistet weiterhin, dass genügend Einbauraum verbleibt, um den Bremssattel einer Scheibenbremse im hinteren Winkelbereich des Achsträgers befestigen zu können.

Die gewählte Anordnung hat weiterhin den Vorteil, dass die Wegübersetzung für die Feder nahe 1 gehalten werden kann, da der Radaufstandspunkt des am Achsträger gehaltenen Rades und die Federabstützung in etwa gleich weit von der Schwenkachse der Radaufhängung an der Karosserie entfernt sind.

Um den oberen Anlenkpunkt des Dämpfers möglichst niedrig anordnen zu können und so einen bis zum Radgehäuse durchgehenden Laderaumboden realisieren zu können, wird vorgeschlagen, den unteren Anlenkpunkt am Achsträger auf Höhe des Anlenkpunktes für den unteren Querträger vorzusehen. Gleichzeitig kann der Dämpfer nahe dem Achsträger angeordnet werden, so dass der Laderaum, falls sein Boden unterhalb des oberen Anlenkpunktes des Dämpfers verläuft, nur wenig seitlich eingeschränkt werden muss.

Für die Kinematik der Radaufhängung ist es von Vorteil, wenn sich der untere Querlenker hinter der Drehachse im Achsträger und der obere in etwa oberhalb der Drehachse im Achsträger befindet. Auf diese Weise lässt sich die Lage der Schwenkachse, die u.a. von einer gedachten mittleren karosserieseitigen Anlenkung der Querlenker bestimmt wird, besser den jeweiligen Gegebenheiten des Fahrzeuges anpassen.

Vorzugsweise wird der Dämpfer zwischen dem Kompensationslenker und dem oberen Querlenker angeordnet.

Ein Stabilisator verläuft vor dem Hilfsrahmen und wird an seinen Enden jeweils mit dem oberen Querlenker über einen in Längsrichtung des Lenkers ausschwenkbaren kurzen Pendelarm angelenkt.

Die beschriebene Anordnung der Radaufhängung am Hilfsrahmen hat den Vorteil, dass die Radaufhängung weitgehend vormontiert und zusammen mit dem Hilfsrahmen an der Karosserie befestigt werden kann. Lediglich für die karosserieseitige Anlenkung des Längslenkers ist ein gesonderter Arbeitsgang notwendig.

Ein für die Realisierung der Erfindung geeigneter Hilfsrahmen besteht aus vier paarweise zu jeder Fahrzeugseite von einem Zentralkörper abstehenden und an ihm befestigten Armen, die an ihren freien Enden am Fahrzeugaufbau befestigt sind, wobei die beiden Arme, die zu einer Fahrzeugseite hin weisen, Teilabschnitte eines U-förmig gebogenen Doppelarmes bilden, der mit seinem Bogenabschnitt am Zentralkörper befestigt ist.

Insbesondere dann, wenn der Zentralkörper ein zu beiden Seiten hin offener Kasten ist, wobei in die seitlichen Öffnungen der Bogenabschnitt eines Doppelarms eintaucht, ergibt sich eine torsionssteife Anordnung, die darüber hinaus leicht anzufertigen ist. Die Kastenstruktur des Zentralkörpers gewährleistet allein schon eine Torsionssteifigkeit, die dadurch erhöht wird, dass die Bogenabschnitte des Doppelarmes in die Seitenöffnungen eintauchen und dort vorzugsweise verschweißt werden.

Die Torsionssteifigkeit kann erhöht werden, wenn der Kasten die Form eines langgestreckten Quaders aufweist, der im Querschnitt geschlossen ist. Um eine gute Einpassung der Bogenabschnitte zu erzielen, werden die seitlichen Öffnungen trichterförmig ausgebildet.

Die Doppelarme werden vorzugsweise aus einem Rohr geformt, das mittels einer Biegemaschine leicht auf die für das Fahrzeug vorgesehene Form gebracht werden kann. Eine besonders gute Verbindung zwischen dem Rohr und dem Kasten erhält man, wenn die Höhe des Kastens der Rohrdicke entspricht und das Rohr über die gesamte Länge seines Bodens bis zur Rohrachse in die Öffnung eintaucht. Der obere und der untere Rand des Kastens verlaufen dann tangential in die Mantelfläche des Rohres ein, so dass die beiden Teile spannungsfrei miteinander verschweißt werden können.

Die Arme werden von Lenkerkräften freigestellt, wenn die Radlenker unmittelbar am Zentralkörper angelenkt werden. Insbesondere bei einem Doppelquerlenker mit einem oberen und einem unteren Lenker können die Lagerböcke für die Aufnahme der Anlenkung auf der Oberseite und auf der Unterseite des Zentralkörpers angeordnet werden.

Es bietet sich an, die Lagerböcke nicht als Einzelteile an dem Zentralkörper zu befestigen, sondern die Lagerböcke unmittelbar am Zentralkörper anzuformen. Am Zentralkörper können weiterhin Lagerungen für einen Stabilisator vorgesehen werden.

Da die Konstruktion des Hilfsrahmens unabhängig vom verwendeten Material eine ausreichende Steifigkeit gewährleistet, kann er aus Leichtmetall, z. B. Aluminium gefertigt werden. Dies hat den Vorteil, dass der Hilfsrahmen eine ausreichende Steifigkeit aufweist und trotzdem relativ leicht ist.

Die Erfindung soll im folgenden anhand eines Ausführungsbeispiels näher erläutert werden, das in drei

Zeichnungen dargestellt ist. Dabei zeigen
- Fig. 1:: eine Draufsicht und die
- Fig. 2:: eine Rückansicht der Radaufhängung mit Teilen des Hilfsrahmens, sowie

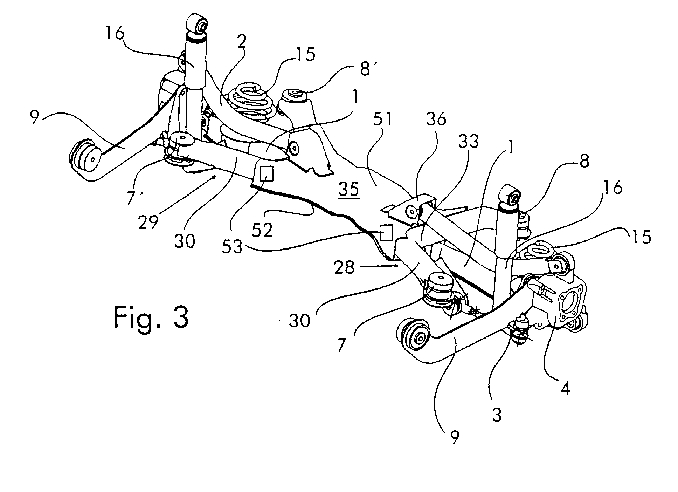

- Fig. 3:: eine perspektivische Darstellung einer Hinterachse mit Hilfsrahmen.

Die Radaufhängung besteht aus einem unteren Querlenker 1, einem oberen Querlenker 2 sowie einem quer angeordneten Kompensationslenker 3 und einem Längslenker 9. Die drei quer angeordneten Lenker erstrecken sich parallel zueinander und in etwa parallel zur Fahrzeughorizontalen. Die Anlenkpunkte 11, 12 , 13 der Lenker am Achsträger 4 bilden in etwa ein gleichschenkliges Dreieck, wobei die Anlenkung 12 des oberen Querlenkers 2 oberhalb der Radachse 5 und die Anlenkungen 11, 13 des unteren Querlenkers 1 und des Kompensationslenkers 3 unterhalb zu beiden Seiten der Radachse 5 des Achsträgers 4 erfolgen.

Karosserieseitig sind die Querlenker an einem Hilfsrahmen 6 befestigt, der weiter unten näher beschrieben werden soll. Dieser wird über vier Befestigungspunkte 7, 8; 7', 8', je zwei auf jeder Fahrzeugseite, am Karosserieboden befestigt.

Der untere Querlenker 1 und der obere Querlenker 2 sind an der Ober- und Unterseite des Hilfsrahmens 6 gegenüber den Befestigungspunkten 7, 8 nach innen versetzt angelenkt (Anlenkungen 21, 22). Die karosserieseitige Anlenkung 23 des Kompensationslenkers 3 erfolgt in etwa unterhalb des vorderen Befestigungspunktes 7.

Die Befestigungspunkte 7, 8 liegen etwa hintereinander auf halber-Breite zwischen dem Achsträger und den karosserieseitigen Anlenkungen 21, 22 des unteren Querlenkers 1 und des oberen Querlenkers 2. Der untere und der obere Querlenker 1, 2 werden beidseitig jeweils in längs zur Fahrzeuglängsachse ausgerichteten Dämpfungsbuchsen gelagert. Das gummiartige Material in den Buchsen gewährleistet zum einen eine Körperschallisolierung und zum anderen eine gewisse Nachgiebigkeit der Anlenkung, so daß ein Verschwenken des Achsträgers 4 durch eine Raumkurve erfolgen kann, deren Lage im Bezug zur Karosserie insbesondere vom Kompensationslenker 3 und einem Längslenker 9 im Zusammenwirken mit den Querlenkern 1, 2 bestimmt wird.

Bei dem Längslenker 9 handelt sich um ein schwertartiges verwindungsweiches Blech , das vertikal zum Fahrzeug ausgerichtet ist und damit Verbiegungen in der Horizontalebene, aber nicht in der Vertikalebene zuläßt. Es hat insbesondere die Aufgabe, den Vorlauf des Hinterrades beim Einfedern zu kontrollieren. Der Längslenker 9 ist fest mit dem Achsträger 4 verbunden und senkrecht zur Fahrzeuglängsachse verschwenkbar an der Karosserie gelagert.

Demgegenüber hat der Kompensationslenker 3 die Aufgabe, den Sturzverlauf beim Einfedern zu kontrollieren. Dazu ist der Kompensationslenker 3 achsträgerseitig in einem Kugelgelenk und karosserieseitig in einer Dämpfungsbuchse gelagert.

Die Abstützung der Radaufhängung erfolgt mittels einer Feder 15 und eines Dämpfers 16. Die Feder 15 liegt auf einem Federteller 17 am unteren Querlenker nahe der achsträgerseitigen Anlenkung 21. Der obere Querlenker 2 verläuft vor dem von der Feder eingenommenen Raum.

Als Feder 15 wird eine Tonnenfeder mit progressiver Kennung vorgesehen. Diese baut flach und ragt nicht viel über den hinteren Befestigungspunkt 8 hinaus auf. Der Dämpfer 16 ist zwischen dem oberen Querlenker 2 und dem Kompensationslenker 3 nahe dem Achsträger 4 vorgesehen. Das untere Befestigungsauge 26 befindet sich auf derselben Höhe wie die achsträgerseitige Anlenkung 11 des unteren Querträgers 1.

Im Bereich des Dämpfers 16 wird auch das achsträgerseitige Ende des Längsträgers 9 am Achsträger 4 befestigt.

Die die Einfederung des Achsträgers 4 bzw. des daran befestigten Fahrzeugrades bestimmende Schwenkachse 25 verläuft zumindest für kleine Federwege durch eine von den karosserieseitigen Anlenkungen 21, 22 des oberen und unteren Querlenkers 1, 2 bestimmten mittleren Anlenkpunkt 20 sowie der karosserieseitigen Anlenkung 23 des Kompensationslenkers 3. Wie man leicht feststellen kann, sind die Abstände der Federabstützung sowie des mittleren Radaufstandspunktes 24 zur Schwenkachse 25 nicht sehr verschieden voneinander, so daß sich eine nahezu optimale Wegübersetzung für die Einfederung ergibt. Eine Anordnung der Feder koaxial zum Dämpfer - wie im Stand der Technik vorgeschlagen - ergäbe eine wesentlich schlechtere Wegübersetzung.

Der Hilfsrahmen 6, dessen linke Hälfte in Fig. 1 und 2 dargestellt ist und dessen rechte Hälfte spiegelbildlich zu der dargestellten Hälfte konstruiert ist, besteht aus zwei Doppelarmen 28, 29 auf jeder Fahrzeugseite. Ein Doppelarm 28 (bzw. 29) ist jeweils aus einem Rohr 30 gebildet, an dessen Enden kurze Zylinder 31, 32 zur Aufnahme von Dämpfungsbuchsen zur Bildung der Befestigungspunkte 7, 8 vorgesehen sind. In der Draufsicht hat jedes Rohr 30 in etwa die Form eines U, dessen Bogenabschnitt 33 zum Teil in einen stirnseitig offenen Kasten 35 eintaucht und mit ihm verschweißt ist. Der Kasten 35 bildet damit eine steife Verbindung zwischen dem linken und dem rechten Doppelarm 28, 29.

Der Kasten 35 weist einen geschlossenen Querschnitt auf und öffnet sich lediglich auf beiden Stirnseiten trichterförmig, um jeweils den Bogenabschnitt 33 des linken bzw. rechten Doppelarms 28, 29 aufzunehmen. Der Kasten ist etwas breiter als hoch, wobei die Höhe bestimmt wird durch den Durchmesser der für die Doppelarme verwendeten Rohre 30. Wie der Darstellung zu entnehmen ist, schmiegen sich die Rohre 30 in die offenen Stirnseiten ein und bilden somit die seitlichen Abschlüsse des Kastens 35.

Der Kasten 35 ist gleichzeitig Träger der Lagerböcke 36, 37 für die karosserieseitige Anlenkung 21, 22 des unteren Querlenkers 1 und des oberen Querlenkers 2. Der Lagerbock 36 für den oberen Querlenker 2 ist auf der Oberseite des Kastens 35 und der Lagerbock 37 für den unteren Querlenker 1 auf der unteren Seite des Kastens 35 angeordnet. Bei den Lagerböcken kann es sich um jeweils gesonderte Teile handeln, die am Kasten angeschweißt werden, oder aber um einstückig mit der oberen bzw. unteren Kastenwand ausgeführte Teile, die z. B. durch Preßformen aus der Kastenwand ausgebildet werden. Der Lagerbock 36 für den oberen Querlenker 2 ist etwa mittig angeordnet, während der Lagerbock 37 für den unteren Querträger seitlich hinten angeordnet ist, so daß die Seitenwand des Lagerbocks 37 in die hintere Wand des Kastens 35 übergeht.

Um das Gewicht des Hilfsrahmens klein zu halten, ist er insgesamt aus Aluminium hergestellt. Das betrifft sowohl die Rohre 30 als auch den Kasten 35 sowie die Zylinder 30, 31 und die Lagerböcke 36, 37.

An der in Fahrtrichtung nach vorne weisenden Wand des Kastens 35 sind Befestigungen 53 mit Führungen 38 für einen Stabilisator 40 (nur in Fig. 1 gezeigt) vorgesehen, wobei jeweils ein Ende 54 unter den vorderen Arm eines Doppelarms 28 hindurchgeführt und mittels eines kurzen Pendelarms an den mittleren Bereich des oberen Querlenkers 2 pendelnd angelenkt ist.

Mitentscheidend für die besondere Steifigkeit des Rahmens ist, daß jeweils der mittlere Abschnitt der U-förmigen Rohre 30, also der Bogenabschnitt 33, passend in eine der seitlichen Öffnung des Kastens 35 liegt, wobei die seitlichen Abschlußkanten 50 der oberen und der unteren Wand 51, 52 oberhalb und unterhalb der Rohrachse verlaufen, so daß die Wände tangential in das Rohr 30 übergehen. Daher ist die entlang der Abschlußkante 50 geführte Schweißnaht nahezu spannungsfrei. Insgesamt gesehen ergibt sich eine feste und spannungsfreie Verbindung zwischen dem Kasten 35 und den Rohren 30.

## Patentansprüche

1. Hinterradaufhängung für ein Fahrzeug mit einem oberen (2) und einem unteren (1) Querlenker, einem quer angeordneten Kompensationslenker (3) und einem Längslenker (9) für die Mehrfachanlenkung eines Achsträgers (4) an der Fahrzeugkarosserie, wobei, jeweils bezogen auf die Fahrtrichtung des Fahrzeuges, der untere Querlenker (1) hinter der Radachse (5) des Achsträgers (4), der obere Querlenker (2) in etwa oberhalb der Radachse (5) vor dem unteren Querlenker (1) liegt, und mit einer Karosserieabstützung, bestehend aus einer Feder (15) und einem Dämpfer (16), wobei die Feder (15) am unteren Querlenker (1) abgestützt ist, **dadurch gekennzeichnet, daß** das untere Befestigungsauge des Dämpfers (16) unmittelbar am Achsträger (4) gelagert ist, wobei der Kompensationslenker (3) in Fahrtrichtung vor dem Dämpfer (16) liegt, und daß die Querlenker (1, 2) und der Komtensationslenker (3) an einem Hilfsrahmen (6) befestigt sind, wobei die Befestigungspunkte (7, 8) des Hilfsrahmens (6) für jede Fahrzeugseite etwa auf halbem Abstand zwischen dem Achsträger (4) und der karosserieseitigen Anlenkung (21, 22) der Querlenker (1, 2) liegen.

2. Hinterradaufhängung nach Anspruch 1, **dadurch gekennzeichnet, daß** das untere Befestigungsauge des Dämpfers (16) unmittelbar am Achsträger (4) gelagert ist und in etwa auf gleicher Höhe mit dem achsträgerseitigen Anlenkung (21) des unteren Querlenkers (1) liegt.

3. Hinterradaufhängung nach Anspruch 1 oder 2, **dadurch gekennzeichnet, daß** als Feder (15) eine kurze Tonnenfeder mit progressiver Federcharakteristik eingesetzt ist.

4. Hinterradaufhängung nach einem der vorgehenden Ansprüche, **dadurch gekennzeichnet, daß** der Längslenker (9) starr mit dem Achsträger (4) verbunden ist.

5. Hinterradaufhängung nach einem der vorhergehenden Ansprüche, **dadurch gekennzeichnet, daß** die karosserieseitige Anlenkung (23) des Kompensationslenkers (3) unterhalb des vorderen Befestigungspunktes (7) des Hilfsrahmens liegt.

6. Hinterradaufhängung nach einem der vorhergehenden Ansprüche, **dadurch gekennzeichnet, daß** ein vor dem Hilfsrahmen verlaufender Stabilisator (40) an seinen Enden jeweils mit dem oberen Querlenker (2) pendelnd verbunden ist.

## Claims

1. Rear wheel suspension for a vehicle with an upper (2) and a lower (1) transverse control arm, a transversely arranged compensating control arm (3) and a longitudinal control arm (9) for multiple linkage of a cross member (4) to the vehicle body, wherein, in each case referred to the direction of travel of the vehicle, the lower transverse control arm (1) is located behind the wheel axle (5) of the cross member (4), the upper transverse control arm (2) is located approximately above the wheel axle (5) in front of the lower transverse control arm (1), and with a body support consisting of a spring (15) and a shock absorber (16), wherein the spring (15) is supported on the lower transverse control arm (1), **characterised in that** the lower mounting lug of the shock absorber (16) is mounted directly on the cross member (4), wherein the compensating control arm (3) is located in front of the shock absorber (16) in the direction of travel, and **in that** the transverse control arms (1, 2) and the compensating control arm (3) are attached to an auxiliary frame (6), wherein the mounting points (7, 8) of the auxiliary frame (6) for each side of the vehicle are located approximately halfway between the cross member (4) and the linkage (21, 22) of the transverse control arms (1, 2) on the body side.

2. Rear wheel suspension according to claim 1, **characterised in that** the lower mounting lug of the shock absorber (16) is mounted directly on the cross member (4) and located approximately at the same level as the linkage (21) of the lower transverse control arm (1) on the cross member side.

3. Rear wheel suspension according to claim 1 or 2,
**characterised in that** a short barrel spring with progressive spring characteristic is used as the spring (15).

4. Rear wheel suspension according to any of the preceding claims, **characterised in that** the longitudinal control arm (9) is rigidly connected to the cross member (4).

5. Rear wheel suspension according to any of the preceding claims, **characterised in that** the linkage (23) of the compensating control arm (3) on the body side is located below the front mounting point (7) of the auxiliary frame.

6. Rear wheel suspension according to any of the preceding claims, **characterised in that** a stabiliser (40) running in front of the auxiliary frame is connected in pendulum fashion at each of its ends to the upper transverse control arm (2).

## Revendications

1. Suspension de roue arrière d'un véhicule automobile, avec un bras oscillant transversal supérieur (2) et un bras oscillant transversal inférieur (1), un bras oscillant compensateur (3) et un bras oscillant longitudinal (9) pour la liaison multipoints d'un support de fusée de roue (4) à la carrosserie de véhicule, le bras oscillant inférieur (1) étant disposé derrière la fusée de roue (5), le bras oscillant supérieur (2) étant disposé sensiblement au-dessus de la fusée de roue (5), devant le bras oscillant inférieur (1), rapporté chaque fois à la direction de déplacement du véhicule, et avec un appui de carrosserie comprenant un ressort (15) et un amortisseur (16), le ressort (15) prenant appui sur le bras oscillant inférieur (1), **caractérisée en ce que** l'oeil de fixation inférieur de l'amortisseur (16) est monté directement sur le support de fusée de roue (4), le bras oscillant compensateur (3) étant situé devant l'amortisseur (16) dans la direction de déplacement, et **en ce que** les bras oscillants transversaux (1, 2) et le bras oscillant compensateur (3) sont fixés à un châssis auxiliaire (6), les points de fixation (7, 8) du châssis auxiliaire (6), pour chaque côté du véhicule, étant situés sensiblement à mi-distance entre le support de fusée de roue (4) et l'attache (21, 22) côté carrosserie des bras oscillants transversaux (1, 2).

2. Suspension de roue arrière selon la revendication 1, **caractérisée en ce que** l'oeil de fixation inférieur de l'amortisseur (16) est monté directement sur le support de fusée de roue (4) et est situé sensiblement à la même hauteur que l'attache (21) côté support de fusée de roue du bras oscillant transversal inférieur (1).

3. Suspension de roue arrière selon la revendication 1 ou 2, **caractérisée en ce qu'**on utilise comme ressort (15) des ressorts en forme de tonneaux courts à élasticité progressive.

4. Suspension de roue arrière selon une des revendications précédentes, **caractérisée en ce que** le bras oscillant longitudinal (9) est lié rigidement au support de fusée de roue (4).

5. Suspension de roue arrière selon une des revendications précédentes, **caractérisée en ce que** l'attache (23) côté carrosserie du bras oscillant compensateur (3) est située en-dessous du point de fixation antérieur (7) du châssis auxiliaire.

6. Suspension de roue arrière selon une des revendications précédentes, **caractérisée en ce qu'**un stabilisateur (40) qui s'étend devant le châssis auxiliaire est lié de manière oscillante à ses extrémités au bras oscillant transversal supérieur (2).
